# EUROPEAN PATENT SPECIFICATION

(11) **EP 2 372 199 B1**
(45) Date of publication and mention of the grant of the patent: **14.11.2012**
(21) Application number: 11159093.1
(22) Date of filing: 21.03.2011
(51) Int. Cl.: F16H 63/32, F16H 63/48

(54) **Automatic manual transmission provided with parking lock device**
Automatisiertes Handschaltgetriebe mit Parksperre
Transmission manuelle automatisée avec verrouillage de stationnement

(30) Priority: 19.03.2010 IT BO20100175
(43) Date of publication of application: 05.10.2011
(73) Proprietor: Magneti Marelli S.p.A., Corbetta (MI) (IT)
(72) Inventor: Medico, Giuseppe, 10098, Rivoli (IT); Palazzetti, Andrea, 10051, Avigliana (IT); Antonini, Giovanni Luigi, 30031, Dolo (IT); Amisano, Fabrizio, 10144, Torino (IT)
(74) Representative: Jorio, Paolo

(56) References cited:
- JP-A- 7 139 628
- JP-A- 2002 039 380
- JP-A- 2006 105 221
- US-A- 4 709 793
- US-B1- 6 361 469
- US-B1- 6 588 294

## Description

### TECHNICAL FIELD

The present invention relates to an automatic manual transmission provided with a parking lock device (also known as "park lock").

The present invention is advantageously applied in a double-clutch gearbox, to which explicit reference will be made in the following description without therefore loosing in generality.

### PRIOR ART

A double-clutch gearbox is normally provided with a parking lock device, which is adapted to prevent the rotation of the drive wheels (i.e. the movement of the vehicle) once the vehicle itself has been parked. In particular, the parking lock device is indispensable when the clutches of the double-clutch gearbox are normally open and therefore they are always open when the vehicle engine is off.

The parking lock device may be arranged either inside the gearbox to act on the secondary shaft of the gearbox or may be arranged inside the differential; furthermore, the parking lock device comprises an actuator which may be of the hydraulic, electric or mechanical type, and is adapted to arrange the parking lock device either in a resting position (in which the drive wheel rotation is free) or in a locking position (in which the drive wheel rotation is prevented). An example of a parking lock device with electric actuators is provided by patent US6361469B1.

However, the need to have a dedicated actuator for controlling the parking lock device greatly increases the cost and dimensions of the parking lock device. With this regards, it is worth noting that the actuator which controls the parking lock device should be capable of rapidly developing (i.e. in short times) a considerable force to overcome possible jamming of the parking lock device and so to always ensure the correct control of the parking lock device itself; therefore, the actuator which controls the parking lock device has high cost and large dimensions. Moreover, the actuator which controls the parking lock device should be highly reliable, because a malfunction thereof may leave the parked vehicle free to move in an uncontrolled manner (if the actuator failure prevents the parking lock device from being activated) or may prevent the vehicle from starting off (if the actuator failure prevents the parking lock device from being deactivated).

### DESCRIPTION OF THE INVENTION

It is the object of the present invention to provide an automatic manual transmission provided with a parking lock device, which automatic manual transmission is free from the above-described drawbacks and, in particular, is easy and cost-effective to be implemented and is light, compact and reliable.

According to the present invention, an automatic manual transmission equipped with a parking lock device is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view, with parts removed for clarity, of a double-clutch gearbox provided according to the present invention;
- figure 2 is a diagrammatic, perspective view, with parts removed for clarity, of a fork of a synchronizer of the double-clutch gearbox in figure 1;
- figures 3-5 are diagrammatic views of the forks of the synchronizers of the double-clutch gearbox in figure 1 in three different configurations; and
- figures 6 and 7 are diagrammatic views of a connecting device which, on one side, is coupled to a fork in figures 3-5 and, on the other side, is coupled to a parking lock device.

### PREFERRED EMBODIMENTS OF THE INVENTION

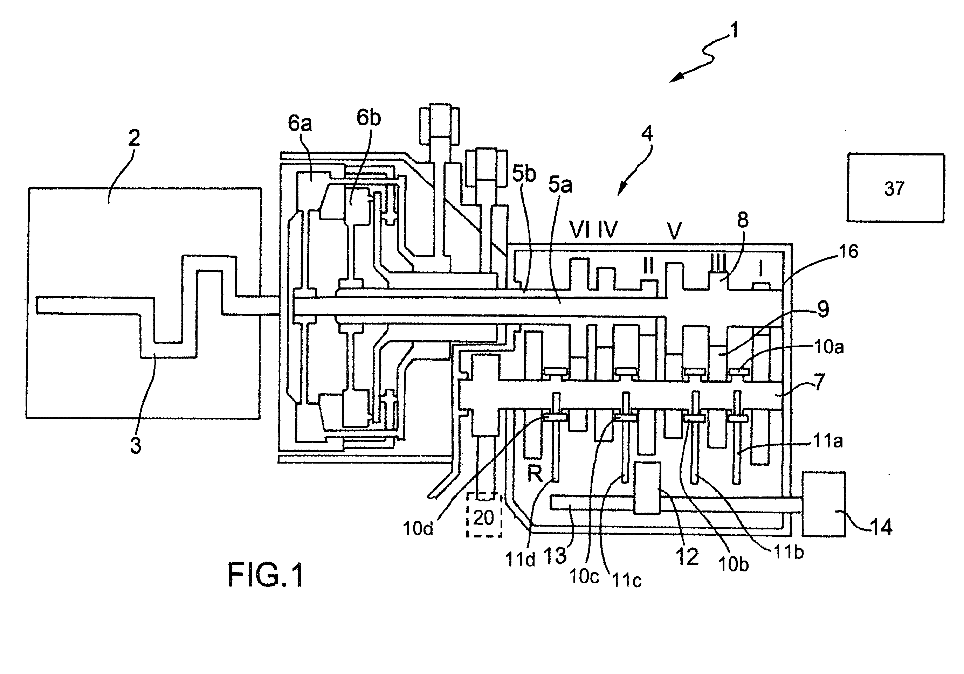

In figure 1, numeral 1 indicates as a whole an automatic manual transmission for a vehicle (not shown) propelled by an internal combustion engine 2, which is provided with a drive shaft 3.

The automatic manual transmission 1 comprises a servo-assisted double-clutch gearbox 4, which is provided with a pair of reciprocally coaxial, independent primary shafts 5, inserted into each other. Furthermore, the double-clutch gearbox 4 comprises two coaxial clutches 6 arranged in series, each of which is adapted to connect a respective primary shaft 5 to the drive shaft 3 of the internal combustion engine 2. The double-clutch gearbox 4 comprises a single secondary shaft 7 connected to a differential (not shown) which transmits motion to the drive wheels (not shown).

The double-clutch gearbox 4 shown in the accompanying figure have six forward gears indicated by Roman numerals (first gear I, second gear II, third gear III, fourth gear IV, fifth gear V, and sixth gear VI) and one reverse gear (indicated by letter R). Each primary shaft 5 and the secondary shaft 7 are mechanically coupled to each other by means of a plurality of gear pairs, each of which defines a respective gear, and comprises a primary gear 8 mounted to the primary shaft 5 and a secondary gear 9 mounted to the secondary shaft 7. In order to allow the correct operation of the double-clutch gearbox 4, all the odd gears (first gear I, third gear III, fifth gear V) are coupled to the same primary shaft 5a, while all the even gears (second gear II, fourth gear IV, and sixth gear VI) are coupled to the other primary shaft 5b.

Each primary gear 8 is keyed onto a respective primary shaft 5 to rotate, again integrally, with the primary shaft 5 itself, and permanently meshes with the respective secondary gear 9; instead, each secondary gear 9 is idly mounted to the secondary shaft 7. Moreover, the double-clutch gearbox 4 comprises four synchronizers 10, each of which is coaxially mounted to the secondary shaft 7, is arranged between two secondary gears 9 (with the exception of synchronizer 10 of the fifth gear V, which is arranged by the side of a single secondary gear 9), and is adapted to be actuated for alternatively engaging the two respective secondary gears 9 to the secondary shaft 7 (i.e. for alternatively making the two respective gears 9 angularly integral with the secondary shaft 7). In other words, each synchronizer 10 comprises a guiding sleeve which may be displaced in one direction to engage a secondary gear 9 onto the secondary shaft 7, or may be displaced in the other direction to engage the other secondary gear 9 to the secondary shaft 7 (with the exception of synchronizer 10 of the fifth gear V, which engages a single secondary gear 9 onto the secondary shaft 7).

Each synchronizer 10 is arranged between two secondary gears 9 (with the exception of synchronizer 10 of the fifth gear V, which is arranged by the side of a single secondary gear 9) and is actuated by a respective fork 11, which is axially displaced along the secondary shaft 7 in the two directions for displacing the guiding sleeve of synchronizer 10 between two engagement positions, in each of which synchronizer 10 engages a respective secondary gear 9, and an intermediate idle position, in which synchronizer 10 does not engage either of the two secondary gears 9 (as previously mentioned, synchronizer 10 of the fifth gear V has a single engagement position). Furthermore, each fork 11 is actuated by a finger 12, which is moved by a control shaft 13 of a single common speed actuator 14, which may be either hydraulic or electric; speed actuator 14 imparts an axial translational movement (i.e. parallel to a longitudinal axis 15 of the control shaft 13) and a rotational movement about the longitudinal axis 15 of control shaft 13. In the disclosed embodiment, control shaft 13 is provided with a single finger 12 which controls all forks 11; according to a different embodiment (not shown), two independent fingers 12 are provided (i.e. mounted to two different control shafts 13 actuated by two respective, separated gear actuators 14) each of which control two corresponding forks 11.

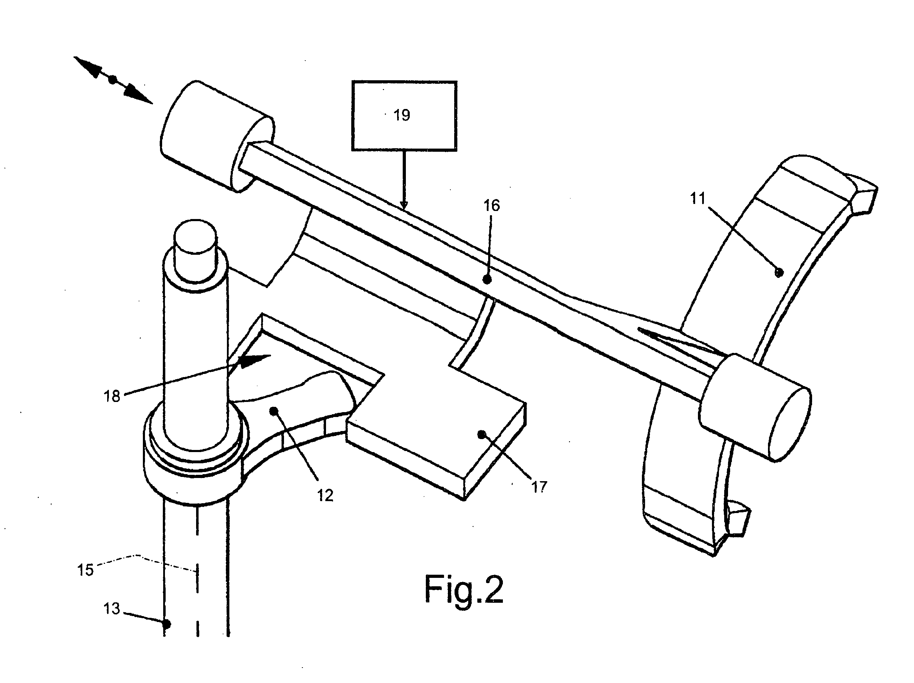

As shown in figure 2, each fork 11 is carried by a rod 16, which is axially and slidingly mounted to allow the fork 11 itself to be axially displaced along the secondary shaft 7 in the two directions. Each rod 16 is integral with a plate 17, in which a nib 18 is defined, i.e. a rectangular seat in which finger 12 may be inserted for axially pushing plate 17 and thus rod 16, in the two directions. From figure 2, it is apparent that the axial translational movement along the longitudinal axis 15 of control shaft 13 allows to insert finger 12 into a given nib 18, and thus allows to select the speed range, while the rotational movement about the longitudinal axis 15 of control shaft 13 allows a corresponding fork 11 to be displaced, and thus allows a speed of the currently selected range to be engaged or disengaged.

Each fork 11 is associated with a stopping device 19 which is, for example, mechanically connected to rod 16, is provided according to the known spring-and-ball architecture, and is adapted to keep fork 11 in the current position with a constant, predetermined stopping force. Each stopping device 19 serves the function of keeping fork 11 in the current position, avoiding random, uncontrolled and undesired movements of the fork 11 itself; obviously, according to the modes described below, the control shaft 13 is capable of applying a driving force to each fork 11, which is sufficiently higher than the stopping force generated by the respective stopping device 19, to ensure the desired displacement of the fork 11 itself.

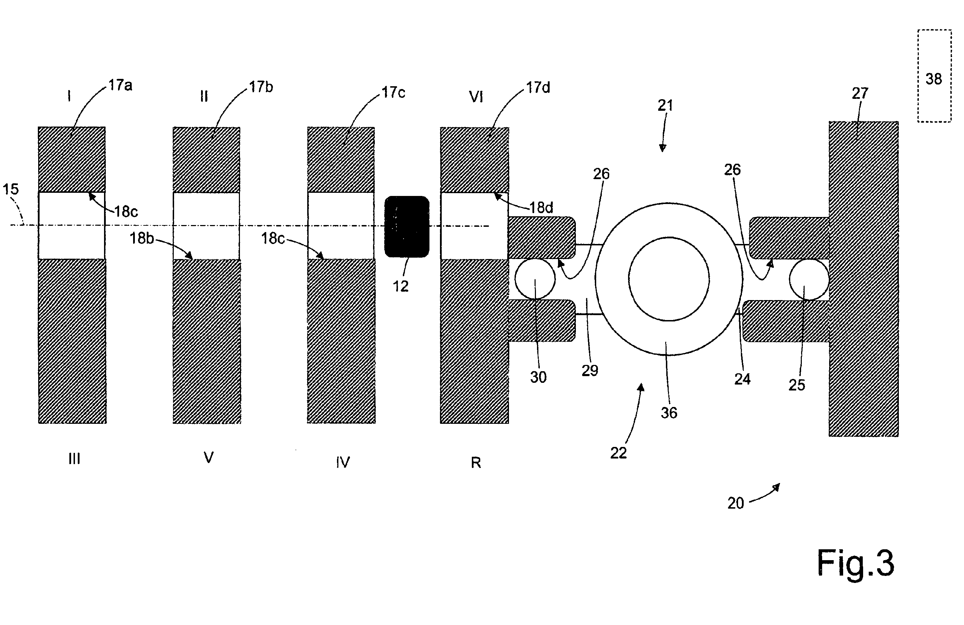

As shown in figure 3, the four nibs 18 are arranged parallelly aligned with the longitudinal axis 15 of control shaft 13, are equally spaced from one another, and are spaced from one another by a distance greater than the dimension of finger 12, so as to allow finger 12 to pass between two nibs 18 arranged side-by-side. In other words, there is a void between two adjacent nibs 18 which is larger than finger 12, so as to allow finger 12 to pass in such a void; such a feature is essential for allowing finger 12 to be displaced between nibs 18 following the shortest, and therefore fastest, path.

The automatic manual transmission 1 comprises a parking lock device 20, which is adapted to lock the rotation of the vehicle drive wheels (not shown) by locking the rotation of the secondary shaft 7 of the double-clutch gearbox 4 and is automatically activated when the vehicle is parked. The parking lock device 20 may lock the rotation of the secondary shaft 7 of the double-clutch gearbox 4 either directly (i.e. by means of a ratchet directly on the secondary shaft 7) or indirectly (i.e. by means of a ratchet on a rotating body which is arranged downstream of the secondary shaft 7 and is angularly integral with the secondary shaft 7 to receive motion from the secondary shaft 7 itself).

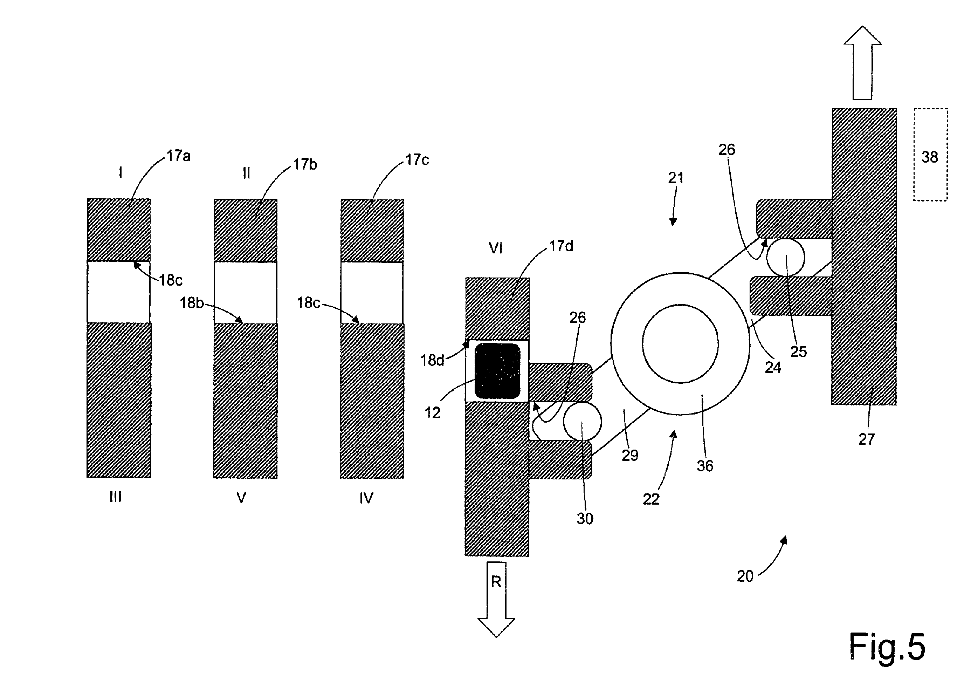

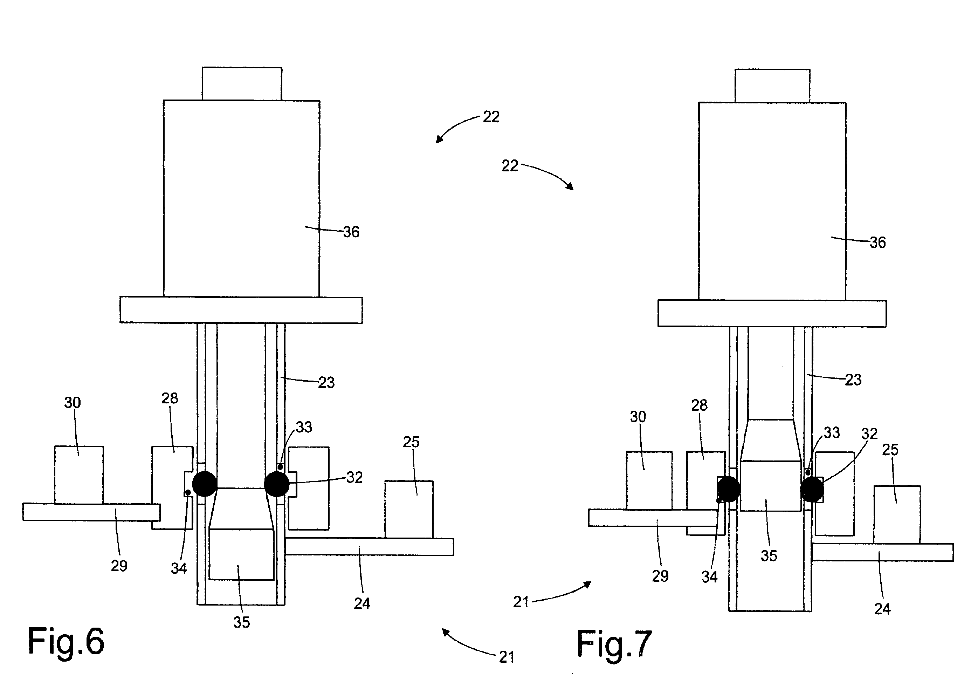

As shown in figures 3-7, the automatic manual transmission 1 comprises a connecting device 21, which is mechanically connected to fork 11d on one side (which supports plate 17d and actuates synchronizer 10d which engages a gear 9 of reverse gear R) and, on the other side, to the parking lock device 20 to transmit the movement of fork 11d to the parking lock device 20, so as to control the activation and deactivation of the parking lock device 20 itself by exploiting the movement of fork 11d. According to a preferred embodiment, the connecting device 21 comprises a coupling member 22, which is drivable between a disengagement position (shown in figure 3, 4 and 6), in which the movement of fork 11d is not transmitted to the parking lock device 20, and an engagement position (shown in figure 5 and 7), in which the movement of fork 11d is transmitted to the parking lock device 20 to control the activation and deactivation of the parking lock device 20 itself by exploiting the movement of fork 11d.

According to a preferred embodiment, fork 11d controls the activation and deactivation of the parking lock device 20 by means of the engaging and disengaging movement of reverse gear R, because such an engaging and disengaging movement of reverse gear R is activated under standing-vehicle conditions coinciding with vehicle conditions in which the actuation of the parking lock device 20 is controlled. Alternatively, the parking lock device 20 may be restrained to fork 11a, so that fork 11a controls the activation and deactivation of the parking lock device 20 by means of the engaging and disengaging movement of first gear I, because such an engaging and disengaging movement of first gear I is also activated when the vehicle is either standing or moving at very slow speed.

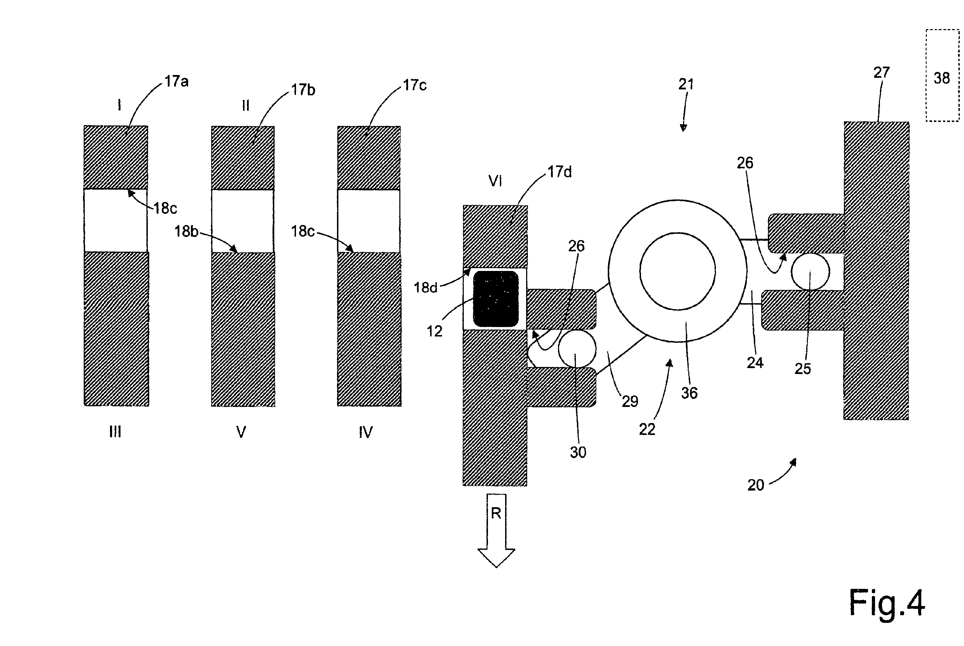

The connecting device 21 comprises a tubular body 23, which has a cylindrical section and supports an arm 24 which radially and overhangingly protrudes from the tubular body 23 and is angularly integral with the tubular body 23 itself. Arm 24 supports a pin 25 which is inserted into a seat 26 obtained in a driving element 27 of the parking lock device 20; the driving element 27 of the parking lock device 20 is movable to be displaced between an active position (shown in figure 5), in which the parking lock device 20 is activated, and a deactivated position (shown in figures 4 and 5), in which the parking lock device 20 is deactivated.

Furthermore, the connecting device 21 comprises a tubular sleeve 28, which is arranged about the tubular body 23 and is normally independent from the tubular body 23 itself (i.e. it may freely rotate about tubular body 23 and with respect to tubular body 23, i.e. is angularly independent from tubular body 23). The tubular sleeve 28 supports an arm 29 which radially overhangingly protrudes from tubular sleeve 28 and is angularly integral with the tubular sleeve 28 itself; in particular, arm 29 extends from the opposite side of tubular body 23 with respect to arm 24. Arm 29 supports a pin 30 which is inserted into a seat 31 obtained in the plate 17d carried by fork 11d.

The coupling member 22 is adapted to make the tubular sleeve 28 angularly integral with the tubular body 23, i.e. to make arm 29 angularly integral with arm 24; making tubular sleeve 28 angularly integral with tubular body 23 (i.e. making arm 29 angularly integral with arm 24) establishes a mechanical connection between the plate 17d carried by fork 11d and the driving element 27 of the parking lock device 20 to transmit movement from the carried plate 17d to the driving element 27.

As shown in figures 6 and 7, the coupling member 22 comprises at least two balls 32, which are carried by the tubular body 23 and protrude outwards from the tubular body 23 through the through holes 33 to engage corresponding seats 34 obtained in an inner surface of the tubular sleeve 28. Moreover, the coupling member 22 comprises a driving element 35, which is axially movable between the disengagement position and the engagement position, and has a truncated-cone portion (i.e. wedge-shaped) at the balls 32, and an electromagnetic actuator 36 which displaces the driving element 35 between the disengagement portion and the engagement portion, and comprises an elastic body which pushes the driving element 35 into the disengagement position and an electromagnet which, when activated, displaces the driving element 35 from the disengagement position to the engagement position, thus compressing the elastic member. In the disengagement position, the driving element 35 does not radially push the balls 32 outwards the through holes 33 to engage seats 34 of the tubular sleeve 28 and thus allow the tubular sleeve 28 to freely rotate with respect to the tubular body 23; instead, in the engagement position, the driving element 35 radially pushes balls 32 outwards the through holes 33 to engage seats 34 of the tubular sleeve 28, and thus angularly restrain the tubular sleeve 28 to the tubular body 23.

The automatic manual transmission 1 finally comprises a transmission control unit 37 (diagrammatically shown in figure 1), which drives the gear actuator 14 for engaging/disengaging the gears, drives the clutch actuators (not shown) which control the opening and closing of the two clutches 6, and drives the coupling member 22 to activate or deactivate the parking lock device 20 by moving fork 11d. A position sensor 38 is preferably provided, which is connected to the transmission control unit 37 and detects a position of the parking lock device 20.

According to a possible embodiment, the parking lock device 20 comprises mechanical safeties which prevent the parking lock device 20 from being activated (i.e. the drive wheels from locking) if the vehicle speed is not zero or close to zero. Thereby, the parking lock device 20 is avoided from being activated in an accidental or undesired manner when the vehicle is moving and upon a malfunction of the coupling member 22.

According to a possible embodiment, the parking lock device 20 comprises a stopping device (similar to the stopping device 19 of forks 11), which is mechanically coupled to the driving element 27, for example, and is adapted to keep the control element 27 in the current position with a constant, predetermined stopping force. The stopping device serves the function of keeping the driving element 27 in the current position, avoiding random, uncontrolled and undesired movements of the control element 27 itself; obviously, the control shaft 13 of the gear actuator 14 is able to apply a driving force to the driving element 27, which is sufficiently higher than the stopping force generated by the stopping device to ensure the desired movement of the driving element 27 itself.

The activation and deactivation of the parking lock device 20 using gear actuator 14 is described below with reference to figures 3-5. It is worth noting that when the vehicle is moving (or is to start moving), gear actuator 14 is used to engage and disengage the gears, while when the vehicle is parked, gear actuator 14 is used to activate and deactivate the parking lock device 20.

In the situation shown in figure 3, no gear is engaged and the parking lock device 20 is deactivated. In the situation shown in figure 4, reverse gear R is engaged and the parking lock device 20 is deactivated. In the situation shown in figure 4, reverse gear R is engaged (but in an "accidental" manner, i.e. it is engaged to drive the parking lock device 20 and is not actually used to move the vehicle) and the parking lock device 20 is activated.

When the vehicle is moving (or is to start moving), the parking lock device 20 is never activated and, therefore, the coupling member 22 is deactivated to release the movement of plate 17d (integral with fork 11d) of the driving element 27 of the parking lock device 20. Accordingly, as shown in figure 4, the transmission control unit 37 may actuate plate 17d by means of finger 12 of the gear actuator 14 to engage/disengage the corresponding gears (reverse gear R and sixth gear VI) without any effect on the parking lock device 20.

When the vehicle is parked, the parking lock device 20 should be deactivated (at the beginning of the step of parking) and deactivated (at the end of the step of parking), and thus the engagement member 22 is activated to restrain the movement of plate 17d (integral with fork 11d) to the driving element 27 of the parking lock device 20. Accordingly, as shown in figure 5, the transmission control unit 37 actuates plate 17d by means of finger 12 of the gear actuator 14 in order to only generate a similar movement in the driving element 27 of the parking lock device 20 so as to activate or deactivate the parking lock device 20.

In the embodiment shown in the accompanying figures, the automatic manual transmission 1 comprises a double-clutch gearbox 4; according to an alternative embodiment (not shown), the automatic manual transmission 1 comprises a single-clutch gearbox.

The above-described automatic manual transmission 1 has many advantages, because it allows to control the activation and deactivation of the parking lock device 20 in a simple, cost-effective, compact and reliable manner. Such a result is obtained due to the activation and deactivation of the parking lock device 20 being controlled by using the gear actuator 14 which, when the vehicle is moving, is used to control the gear engagement in the double-clutch gearbox 4; thereby, providing for an actuator exclusively dedicated to control the activation and deactivation of the parking lock device 20 is not required. It is worth noting that the coupling member 22 is simple and cost-effective to be made, because it must only serve the function of mechanically connecting and disconnecting the two mechanical elements adjacent to each other.

## Claims

1. Automatic manual transmission (1) comprising:
at least one primary shaft (5);
at least one secondary shaft (7);
a plurality of gear pairs (8, 9), each of which mechanically couples the primary shaft (5) to the secondary shaft (7), defines a respective gear and includes a primary gear (8) mounted on the primary shaft (5) and a secondary gear (9) which is mounted on the secondary shaft (7) and permanently meshes with the primary gear (8);
a plurality of synchronizers (10), each of which is mounted coaxial to a shaft (7), is coupled to a gear (9) of at least a gear pair, and is actuated to engage the gear (9) to the shaft (7);
a plurality of forks (11), which actuate the synchronizers (10) and are movable; and
a parking lock device (20) which can be actuated to prevent directly or indirectly the rotation of the secondary shaft (7);
the automatic manual transmission (1) is **characterized in that** it comprises a connecting device (21), which is mechanically connected on one side to a first fork (11d) and on the other side to the parking lock device (20) to transmit the movement of the first fork (11d) to the parking lock device (20) in order to control the activation and deactivation of the parking lock device (20) by exploiting the movement of the first fork (11d).

2. Automatic manual transmission (1) according to claim 1, wherein the connecting device (21) comprises a coupling member (22), which is drivable between a disengagement position, in which the movement of the first fork (11d) is not transmitted to the parking lock device (20), and an engagement position, in which the movement of the first fork (11d) is transmitted to the parking lock device (20) to control the activation and deactivation of the parking lock device (20) by exploiting the movement of the first fork (11d).

3. Automatic manual transmission (1) according to claim 2, wherein the coupling member (22) comprises:
a driving element (35), which is movable between the disengagement position and the engagement position; and
an actuator (36) which moves the driving element (35) between the disengagement position and the engagement position.

4. Automatic manual transmission (1) according to claim 1, 2 or 3 wherein the first fork (11d) actuates a first synchronizer (10d) that engages a gear (9) of the reverse gear (R).

5. Automatic manual transmission (1) according to claim 4, wherein the first fork (11d) controls the activation and deactivation of the parking lock device (20) through the movement of engagement and disengagement of the reverse gear (R).

6. Automatic manual transmission (1) according to any of the claims from 1 to 5 and comprising a transmission control unit (37) that drives the engagement and disengagement of the gears and drives the activation and deactivation of the parking lock device (20).

7. Automatic manual transmission (1) according to claim 6 comprising a position sensor (38), which is connected to the transmission control unit (37) and detects a position of the parking lock device (20).

8. Automatic manual transmission (1) according to any of the claims from 1 to 7, and comprising for each fork (11) a corresponding stopping device (19), which is suitable to keep the fork (11) in its current location with a stopping force constant and predetermined.

9. Automatic manual transmission (1) according to any of the claims from 1 to 8, wherein each fork (11) is carried by a rod (16), which is mounted axially sliding and supports a plate (17) on which the corresponding nib (18) is defined.

10. Automatic manual transmission (1) according to any of the claims from 1 to 9 and comprising:
two primary shafts (5); and
two coaxial clutches (6) arranged in series, each of which is attached to a respective primary shaft (5).

## Patentansprüche

1. Automatisiertes Handschaltgetriebe (1) mit:
mindestens einer primären Welle (5);
mindestens einer sekundären Welle (7);
einer Vielzahl von Zahnradpaaren (8, 9), von denen jedes die primäre Welle (5) mechanisch mit der sekundären Welle (7) verbindet, einen entsprechenden Gang festlegt und ein primäres Zahnrad (8), das an der primären Welle (5) angebracht ist, und ein sekundäres Zahnrad (9), das an der sekundären Welle (7) angebracht und in ständigem Eingriff mit dem primären Zahnrad (8) ist, besitzt;
einer Vielzahl von Synchronringen (10), von denen jeder koaxial an einer Welle (7) angebracht ist, an ein Zahnrad (9) mindestens eines Zahnradpaars gekoppelt ist und betätigt wird, um das Zahnrad (9) mit der Welle (7) in Eingriff zu bringen;
einer Vielzahl von Schaltgabeln (11), welche die Synchronringe (10) betätigen und beweglich sind; und
einer Parksperre (20), die betätigt werden kann, um direkt oder indirekt die Drehung der sekundären Welle (7) zu verhindern;
das automatisierte Handschaltgetriebe (1) ist
**dadurch gekennzeichnet, dass** es eine
Verbindungsvorrichtung (21) aufweist, die auf einer Seite mit einer ersten Schaltgabel (11d) und auf der anderen Seite mit der Parksperre (20) mechanisch verbunden ist,
um die Bewegung der ersten Schaltgabel (11d) zur Parksperre (20) zu übertragen mit dem Ziel, die Aktivierung und Deaktivierung der Parksperre (20) durch Nutzen der Bewegung der ersten Schaltgabel (11d) zu steuern.

2. Automatisiertes Handschaltgetriebe (1) nach Anspruch 1, wobei die Verbindungsvorrichtung (21) ein koppelndes Element (22) aufweist, das zwischen einer Ausrückstellung, in der die Bewegung der ersten Schaltgabel (11d) nicht zur Parksperre (20) übertragen wird, und einer Einrückstellung, in der die Bewegung der ersten Schaltgabel (11d) zur Parksperre (20) übertragen wird, antreibbar ist, um das Aktivieren und Deaktivieren der Parksperre (20) durch Nutzen der Bewegung der ersten Schaltgabel (11d) zu steuern.

3. Automatisiertes Handschaltgetriebe (1) nach Anspruch 2, wobei das koppelnde Element (22) aufweist:
ein antreibendes Element (35), das zwischen der Ausrückstellung und der Einrückstellung beweglich ist; und
ein Stellelement (36), welches das antreibende Element (35) zwischen der Ausrückstellung und der Einrückstellung bewegt.

4. Automatisiertes Handschaltgetriebe (1) nach Anspruch 1, 2 oder 3, wobei die erste Schaltgabel (11d) einen ersten Synchronring (10d), der in ein Zahnrad (9) des Rückwärtsgangs (R) greift, betätigt.

5. Automatisiertes Handschaltgetriebe (1) nach Anspruch 4, wobei die erste Schaltgabel (11d) das Aktivieren und Deaktivieren der Parksperre (20) durch die Bewegung des Einlegens und Herausnehmens des Rückwärtsgangs (R) steuert.

6. Automatisiertes Handschaltgetriebe (1) nach einem der Ansprüche 1 bis 5 und mit einer Schaltgetriebesteuerungseinheit (37), die das Einrücken und Ausrücken der Zahnräder antreibt und das Aktivieren und Deaktivieren der Parksperre (20) antreibt.

7. Automatisiertes Handschaltgetriebe (1) nach Anspruch 6, mit einem Stellungssensor (38), der mit der Schaltgetriebesteuerungseinheit (37) verbunden ist und eine Stellung der Parksperre (20) detektiert.

8. Automatisiertes Handschaltgetriebe (1) nach einem der Ansprüche 1 bis 7 und für jede Schaltgabel (11) mit einer entsprechenden Arretiervorrichtung (19), die geeignet ist, die Schaltgabel (11) mit einer konstanten und vorgegebenen Arretierkraft an ihrer aktuellen Stelle zu halten.

9. Automatisiertes Handschaltgetriebe (1) nach einem der Ansprüche 1 bis 8, wobei jede Schaltgabel (11) von einer Stange (16) getragen wird, die axial gleitend angebracht ist und eine Platte (17) hält, auf welcher die entsprechende Nase (18) festgelegt wird.

10. Automatisiertes Handschaltgetriebe (1) nach einem der Ansprüche 1 bis 9, mit:
zwei primären Wellen (5); und
zwei in Reihe angeordneten, koaxialen Kupplungen (6), von denen jede an einer entsprechenden primären Welle (5) angebracht ist.

## Revendications

1. Transmission manuelle automatique (1), comprenant :
au moins un arbre primaire (5) ;
au moins un arbre secondaire (7) ;
une pluralité de paires d'engrenages (8, 9), dont chacun couple mécaniquement l'arbre primaire (5) à l'arbre secondaire (7), définit une vitesse respective et comprend un engrenage primaire (8) monté sur l'arbre primaire (5) et un engrenage secondaire (9) qui est monté sur l'arbre secondaire (7) et qui s'engrène de façon permanente avec l'engrenage primaire (8) ;
une pluralité de synchroniseurs (10), dont chacun est monté de façon coaxiale à un arbre (7), est couplé à un engrenage (9) d'au moins une paire d'engrenages, et est actionné de façon à faire venir en prise l'engrenage (9) avec l'arbre (7) ;
une pluralité de fourches (11), qui actionnent les synchroniseurs (10) et qui sont mobiles ; et
un dispositif de blocage de stationnement (20) qui peut être actionné de façon à empêcher directement ou indirectement la rotation de l'arbre secondaire (7) ;
la transmission manuelle automatique (1) étant **caractérisée en ce qu'**elle comprend un dispositif de liaison (21), qui est mécaniquement relié sur un côté à une première fourche (11d), et, sur l'autre côté, au dispositif de blocage de stationnement (20), de façon à transmettre le mouvement de la première fourche (11d) au dispositif de blocage de stationnement (20) de façon à commander l'activation et la désactivation du dispositif de blocage de stationnement (20) par l'exploitation du mouvement de la première fourche (11d).

2. Transmission manuelle automatique (1) selon la revendication 1, dans laquelle le dispositif de liaison (21) comprend un élément de couplage (22), qui peut être entraîné entre une position de désengagement, dans laquelle le mouvement de la première fourche (11d) n'est pas transmis au dispositif de blocage de stationnement (20), et une position de prise, dans laquelle le mouvement de la première fourche (11 d) est transmis au dispositif de blocage de stationnement (20) de façon à commander l'activation et la désactivation du dispositif de blocage de stationnement (20) par l'exploitation du mouvement de la première fourche (11 d).

3. Transmission manuelle automatique (1) selon la revendication 2, dans laquelle l'élément de couplage (22) comprend :
un élément d'entraînement (35), qui est mobile entre la position de désengagement et la position de prise ; et
un actionneur (36) qui déplace l'élément d'entraînement (35) entre la position de désengagement et la position de prise.

4. Transmission manuelle automatique (1) selon la revendication 1, 2 ou 3, dans laquelle la première fourche (11d) actionne un premier synchroniseur (10d) qui vient en prise avec un engrenage (9) de la marche arrière (AR).

5. Transmission manuelle automatique (1) selon la revendication 4, dans laquelle la première fourche (11d) commande l'activation ou la désactivation du dispositif de blocage de stationnement (20) par le mouvement de mise en prise et de désengagement de la marche arrière (AR).

6. Transmission manuelle automatique (1) selon l'une quelconque des revendications 1 à 5, et comprenant une unité de commande de transmission (37) qui actionne la mise en prise et le désengagement des engrenages et qui actionne l'activation et la désactivation du dispositif de blocage de stationnement (20).

7. Transmission manuelle automatique (1) selon la revendication 6, comprenant un capteur de position (38), qui est relié à l'unité de commande de transmission (37) et qui détecte une position du dispositif de blocage de stationnement (20).

8. Transmission manuelle automatique (1) selon l'une quelconque des revendications 1 à 7, et comprenant pour chaque fourche (11) un dispositif d'arrêt correspondant (19), qui est approprié pour maintenir la fourche (11) dans son emplacement actuel avec une force d'arrêt constante et prédéterminée.

9. Transmission manuelle automatique (1) selon l'une quelconque des revendications 1 à 8, dans laquelle chaque fourche (11) est portée par une tige (16), qui est montée de façon à coulisser axialement et qui supporte une plaque (17) sur laquelle est défini l'ergot correspondant (18).

10. Transmission manuelle automatique (1) selon l'une quelconque des revendications 1 à 9, et comprenant :
deux arbres primaires (5) ; et
deux embrayages coaxiaux (6) disposés en série, chacun d'entre eux étant fixé à un arbre primaire respectif (5).
